# EUROPÄISCHE PATENTSCHRIFT

(11) **EP 3 655 292 B1**
(45) Veröffentlichungstag und Bekanntmachung des Hinweises auf die Patenterteilung: **24.03.2021**
(21) Anmeldenummer: 18769319.7
(22) Anmeldetag: 07.09.2018
(51) Int. Cl.: B60R 25/24, E05B 19/00

(54) **ZUGRIFFSKONTROLLEINRICHTUNG FÜR FAHRZEUGE MIT SICHERHEITSEINRICHTUNG**
ACCESS CONTROLLER FOR VEHICLES, COMPRISING A SECURITY DEVICE
DISPOSITIF DE CONTRÔLE D'ACCÈS POUR VÉHICULES COMPRENANT UN DISPOSITIF DE SÉCURITÉ

(30) Priorität: 04.10.2017 DE 102017122991
(43) Veröffentlichungstag der Anmeldung: 27.05.2020
(73) Patentinhaber: HUF Hülsbeck & Fürst GmbH & Co. KG, 42551 Velbert (DE)
(72) Erfinder: BAMBECK, Daniel, 45149 Essen (DE); SALAM, Okan, 45251 Essen (DE); MEHLICH, Markus, 40476 Düsseldorf (DE)
(74) Vertreter: Zenz Patentanwälte Partnerschaft mbB
(86) Internationale Anmeldenummer: PCT/EP2018/074197
(87) Internationale Veröffentlichungsnummer: WO 2019/068416

(56) Entgegenhaltungen:
- CN-A- 105 905 041
- DE-A1-102005 059 061
- DE-A1-102006 001 410
- DE-A1-102014 119 287
- FR-A1- 3 043 039
- US-A1- 2017 026 360
- US-B1- 8 841 987

## Beschreibung

Die Erfindung betrifft eine Zugriffskontrolleinrichtung für Fahrzeuge, welche einen elektronischen Funkschlüssel aufweist der in einem Gehäuse aufgenommen ist. Der Funkschlüssel seinerseits weist eine elektronische Funkschlüsselschaltung auf.

Funkschlüssel für Fahrzeuge sind seit Langem und in verschiedenen Gestaltungen bekannt. Oft werden sogenannte passive Funkschlüssel eingesetzt, welche ohne aktive Betätigung des Schlüssels in Kommunikation mit einem Fahrzeug treten können, um den Zugriff auf das Fahrzeug oder bestimmte Fahrzeugfunktionen zu erlauben.

Eine solche Zugriffskontrolleinrichtung ist mit einem Funkschlüssel ausgestattet und zur Anordnung in einem Fahrzeug vorgesehen. Die Zugriffskontrolleinrichtung verfügt über eine Steuereinrichtung, die zur zeitweisen Aktivierung des Funkschlüssels ausgebildet ist. Diese Steuereinrichtung weist eine Schnittstelle zur drahtlosen Kommunikation auf und ist ausgebildet, in Abhängigkeit von einer drahtlosen Kommunikation die Aktivierung des Funkschlüssels zu bewirken.

Derartige Einrichtungen sind insbesondere in Carsharing-Systemen oder Mietwagensystemen bekannt. Dabei wird der zum Fahrzeug gehörige Funkschlüssel im Fahrzeug platziert und belassen. Dies ist erforderlich, um insbesondere bei passiven Systemen die Kommunikation zwischen Fahrzeug und Schlüssel sicherzustellen und eine Bewegung des Fahrzeuges zu ermöglichen. Die Fahrzeughersteller können auf diese Weise herkömmliche Serienfahrzeuge für den Gebrauch als Carsharing-Fahrzeuge oder Mietfahrzeuge verwenden, da der Schlüssel dauerhaft im Fahrzeug verbleibt und die vom Fahrzeugsystem bei Betrieb erwartete Anwesenheit des Schlüssels jederzeit gewährleistet ist. Ein Benutzer erhält über eine Kommunikation mit der Steuereinrichtung Zugriff auf das Fahrzeug, da die Steuereinrichtung entscheidet, ob der Funkschlüssel in Abhängigkeit von der Legitimation des Benutzers aktiviert wird oder nicht.

Ein entsprechendes System ist beispielsweise in der DE10 2013 002 281 A1 offenbart. Bei diesem System ist zum Beispiel vorgesehen, dass ein Fahrzeug für einen Verleih vorbereitet ist und ein Fahrzeugfunkschlüssel im Fahrzeug vorhanden ist. Ein Benutzer erhält vom Verwalter des Fahrzeuges (beispielsweise dem Carsharing-Anbieter oder Mietwagenanbieter) einen Freigabecode auf sein tragbares Mobilgerät, beispielsweise Smartphone, übermittelt. Der Benutzer koppelt sein Smartphone über eine Bluetooth-Verbindung mit der Steuereinrichtung und diese gibt, wenn die Autorisierung des Benutzers erfolgreich war, den Zugriff des Fahrzeuges auf den Funkschlüssel frei, beispielsweise indem der Funkschlüssel aktiviert wird Die CN105905041A zeigt eine Einrichtung nach dem Oberbegriff des Anspruchs 1.

Ein Problem bei solchen Systemen besteht darin, dass der Benutzer sich des Funkschlüssels bemächtigen kann, ebenso wie ein Dritter, der sich unrechtmäßig Zugang zum Fahrzeug verschafft.

Aufgabe der Erfindung ist es, eine Zugriffskontrolleinrichtung für Fahrzeuge mit erhöhter Sicherheit auszubilden.

Die Aufgabe wird gelöst durch eine Zugriffskontrolleinrichtung für Fahrzeuge mit den Merkmalen des Patentanspruches 1.

Gemäß der Erfindung ist die Zugriffskontrolleinrichtung mit einer Spannungsversorgung ausgebildet, die mit der Steuereinrichtung und dem Funkschlüssel gekoppelt ist. Die Spannungsversorgung kann in dem gleichen Gehäuse aufgenommen sein wie der Funkschlüssel, dies ist jedoch nicht erforderlich. In jedem Fall unterliegt die Spannungsversorgung einer Kontrolle durch die Steuereinrichtung. Die Spannungsversorgung ist nämlich erfindungsgemäß unter Ansteuerung von der Steuereinrichtung in der Lage, für wenigstens eine erste vorgegebene Zeitdauer eine elektrische Zerstörungsspannung über wenigstens eine Kontaktierung der elektronischen Funkschlüsselschaltung anzulegen, welche größer als eine ausgewiesene Betriebsspannung der elektronischen Funkschlüsselschaltung ist. Dies erfolgt, um die elektronische Funkschlüsselschaltung durch den resultierenden Stromfluss irreversibel zu zerstören.

Die erfindungsgemäße Zugriffskontrolleinrichtung sieht also vor, unter einem Steuerungszugriff der Steuereinrichtung eine Zerstörung des Funkschlüssels, genauer der im Funkschlüssel enthaltenen elektronischen Funkschlüsselschaltung, zu bewirken. Dies soll sicherstellen, dass für den Fall, in dem anhand von äußeren Umständen ableitbar ist, dass ein unerlaubter Zugriff auf den Funkschlüssel erfolgt, eine rasche Zerstörung des Funkschlüssels bewirkt werden kann. Die Auslösung einer solchen Zerstörung kann durch einen Steuerbefehl an die Steuereinrichtung erfolgen, die Steuereinrichtung kann jedoch auch durch das Fahrzeugsystem Signale erhalten, die beispielsweise einen Einbruch in das Fahrzeug anzeigen oder über separate Sensormittel verfügen, die einen unerlaubten Zugriff auf die Funkschlüssel melden.

Es hat sich gezeigt, dass die Zerstörung eines Funkschlüssels durch eine überhöhte Spannung verlässlich und reproduzierbar ist. Die Zerstörungsspannung sollte, je nach Empfindlichkeit der elektronischen Funkschlüsselschaltung, signifikant oberhalb der ausgewiesenen Betriebsspannung liegen und liegt regelmäßig um ein bis zwei Größenordnungen darüber. Die Spannungsversorgung kann die erforderliche elektrische Energie aus dem Bordnetz beziehen oder über eigene Speichermittel verfügen, um die Zerstörung unabhängig vom Bordnetz vollziehen zu können.

Welche Zeitdauer und welche Zerstörungsspannung zu wählen sind, hängt einerseits von der Art der Kontaktierung der elektronischen Funkschlüsselschaltung ab, also, an welche Bauteile die Kontaktierung angelegt ist, und andererseits von gegebenenfalls sicherheitsrelevanten Vorgaben. Zum Beispiel kann bei Spannungen bis 60 V Gleichspannung üblicherweise auf einen Schutz gegen Berühren verzichtet werden, da es sich um Kleinspannungen handelt, die für Mensch und Tier als unbedenklich gelten. Es ist für spezifische elektronische Funkschlüsselschaltungen einfach zu ermitteln, welche Zeitdauer einer entsprechenden Spannungsanlage ausreicht, um eine Zerstörung des Funkschlüssels zu bewirken.

Nachdem der Funkschlüssel zerstört ist, kann ein ordnungsgemäßer Betrieb des Fahrzeugs nicht mehr erfolgen, da die Kommunikation zwischen Funkschlüssel und Fahrzeug dauerhaft unterbunden ist. Das Fahrzeug ist entsprechend stillgelegt.

Bei der Erfindung wird unter Ansteuerung der Steuereinrichtung eine Mehrzahl von elektrischen Spannungspulsen an die elektronische Funkschlüsselschaltung angelegt. Dies erfolgt über die Kontaktierung der elektronischen Funkschlüsselschaltung und die Spannungspulse übersteigen jeweils zumindest zeitweise die Zerstörungsspannung und sind durch Pausen mit geringerer elektrischer Spannung oder auch verschwindender elektrischer Spannung getrennt.

Es hat sich gezeigt, dass eine mehrfache Beaufschlagung der elektronischen Funkschlüsselschaltungen mit einer Folge von Spannungspulsen zu einer besonders verlässlichen Zerstörung der elektronischen Schaltung führt. In Versuchen hat sich gezeigt, dass diese Art der Zerstörung durch Stromfluss einem Anlegen eines einzelnen Spannungspulses, selbst mit größerer Zeitdauer überlegen ist.

Die Spannungsversorgung kann zu diesem Zweck beispielsweise über elektrische Speichermittel, zum Beispiel Kondensatoren verfügen, die in den Pausen zwischen den Pulsen aufgeladen werden und zur Abgabe der Spannungspulse rasch entladen werden.

Die Folge der Spannungspulse kann dabei in kurzer Zeit abgegeben werden, beispielsweise im Abstand von einigen Millisekunden, so dass die Zerstörung des Funkschlüssels mit der darin befindlichen elektronischen Funkschlüsselschaltung in wenigen Zehntelsekunden nach Ansteuerung durch die Steuereinrichtung erfolgt.

Es ist bevorzugt, wenn wenigstens eine Kontaktierung der elektronischen Funkschlüsselschaltung an einen Batteriekontakt der elektronischen Funkschlüsselschaltung angeordnet ist.

Der Vorteil dieser Gestaltung besteht darin, dass über den Batteriekontakt sowohl Versorgungsspannung zum ordnungsgemäßen Betrieb und zur Aktivierung des Funkschlüssels angelegt werden kann, als auch eine Zerstörung über ein und denselben Kontakt erfolgt, der im Betrieb zur Versorgung vorgesehen ist. Auf diese Weise kann die Anzahl der Kontakte zwischen der Spannungsversorgung und der elektronischen Funkschlüsselschaltung reduziert werden.

Es ist weiterhin besonders vorteilhaft, wenn die Spannungsversorgung sowohl zur Versorgung der elektronischen Funkschlüsselschaltung mit der ausgewiesenen Betriebsspannung als auch zur Zerstörung der Funkschlüsselschaltung nach Ansteuerung durch die Steuereinrichtung vorgesehen ist. In diesem Fall ist die Spannungsversorgung also zur Lieferung von unterschiedlichen Spannungen auf verschiedenen Spannungsniveaus beziehungsweise der Abgabe von Spannungspulsen ausgebildet. Dabei schaltet die Spannungsversorgung nur unter Ansteuerung der Steuereinrichtung in eine zerstörerische Spannungsabgabe und ist ansonsten zur Ausgabe der Betriebsspannung des Funkschlüssels vorgesehen. Die Ausgabe der Betriebsspannung kann dabei wiederum in Abhängigkeit von der Steuereinrichtung erfolgen, beispielsweise um den Funkschlüssel zeitweise gänzlich abzuschalten.

In einer bevorzugten Ausführungsform der Erfindung ist die Zerstörungsspannung größer als 30 V gewählt, jedoch kleiner als 100 V, insbesondere kleiner als 60 V.

Die Anlegung einer Spannung im Bereich zwischen 30 V und 100 V hat sich, je nach Anzahl der Dauer der angelegten Spannung und ggf. Anzahl der Spannungspulse als verlässlich zerstörerisch erwiesen. Die Verwendung einer Spannung kleiner als 60 V ist hinsichtlich der Einhaltung von Sicherheitsvorgaben günstig, wie bereits oben erwähnt, da diese als Kleinspannungen gelten, die auch für Tiere und Kinder ungefährlich sind. Entsprechend wird die Wahl einer Spannung zwischen 50 V und 60 V als besonders geeignet für eine rasche und verlässliche Zerstörung der Funkschlüsselschaltung gesehen.

Es ist von besonderem Vorteil, wenn die Spannungsversorgung wenigstens einen Kondensator aufweist, welcher auf die Zerstörungsspannung aufgeladen und unter Steuerung der Steuereinrichtung mit der elektronischen Funkschlüsselschaltung koppelbar ist. Die Verwendung eines Kondensators, welcher die zerstörerischen Spannungen oder Spanungspulse liefern kann, ist eine robuste und verlässliche Konstruktion. Dabei kann der Kondensator über eine einfache Schaltung, gegebenenfalls mit einer Schaltung zur Spannungserhöhung aufgeladen werden und entlädt sich nach Ansteuerung durch die Steuerschaltung unter Einleitung eines zerstörerischen Stromes über die Funkschlüsselschaltung. Es kann im Übrigen vorgesehen sein, einen elektrischen Pufferspeicher für die Spannungsversorgung und die Steuerschaltung vorzusehen, um die Zerstörung des Schlüssels auch bei einer Unterbrechung der Verbindung zum Bordnetz des Fahrzeuges zu gewährleisten.

In einer Weiterbildung der Erfindung ist die Steuereinrichtung mit Sensormitteln zur Überwachung des Gehäuses ausgebildet, welches den Funkschlüssel aufnimmt. Die Steuereinrichtung steuert in Abhängigkeit von Signalen der Sensormittel die Zerstörung der elektronischen Funkschlüsselschaltung durch Ansteuerung der Spannungsversorgung an. In dieser Gestaltung wird davon ausgegangen, dass bei Meldung eines Zugriffs auf das Gehäuse die Erfassung durch die Sensormittel erfolgt und infolge dessen die Zerstörung des Funkschlüssels angezeigt ist. Die Sensormittel können insbesondere mechanische Sensoren sein, die einen ordnungsgemäßen Abschluss des Gehäuses überwachen (zum Beispiel Mikroschalter, welche den Deckel eines Gehäuses kontaktieren) oder zum Beispiel Erschütterungs- oder Lichtdetektoren, die eine Öffnung des Gehäuses ermitteln. Ebenfalls können Drucksensoren oder alle aus der Alarmtechnik bekannten Sensoren zur Überwachung eines abgeschlossenen Bereichs Verwendung finden. Weiterhin können die Sensoren des Fahrzeuges verwendet werden, die mit einem Alarmsystem des Fahrzeuges gekoppelt sind, sofern die Steuereinrichtung mit einem Signalsystem des Fahrzeuges koppelbar ist.

Es kann dabei vorgesehen sein, dass die Steuereinrichtung durch drahtlose Mittel ansteuerbar ist, um die Zerstörungsfunktion zu entschärfen, insbesondere wenn der Schlüssel für Wartungszugriffe oder zu einer Umwandlung des Fahrzeuges von einem Carsharing-Fahrzeug oder Mietfahrzeug in ein reguläres Fahrzeug erfolgen soll.

In einer weiteren Gestaltung der Erfindung ist die Steuereinrichtung so ausgebildet, dass sie in Abhängigkeit von über die Schnittstelle zur drahtlosen Kommunikation empfangenen Daten eine Zerstörung der elektronischen Funkschlüsselschaltung durch Ansteuerung der Spannungsversorgung auslöst.

Insbesondere kann vorgesehen sein, dass die Steuereinrichtung über eine Schnittstelle zur Kommunikation über drahtlose Kommunikationsnetzwerke, insbesondere Mobilnetzte verfügt. Wird ein Diebstahl eines Fahrzeuges gemeldet, kann über ein solches Kommunikationsnetzwerk an die Steuereinrichtung der Befehl zur Zerstörung des Funkschlüssels abgegeben werden, um die Reichweite des Fahrzeuges zu verringern.

Die Erfindung wird nun anhand der beiliegenden Zeichnung näher erläutert.

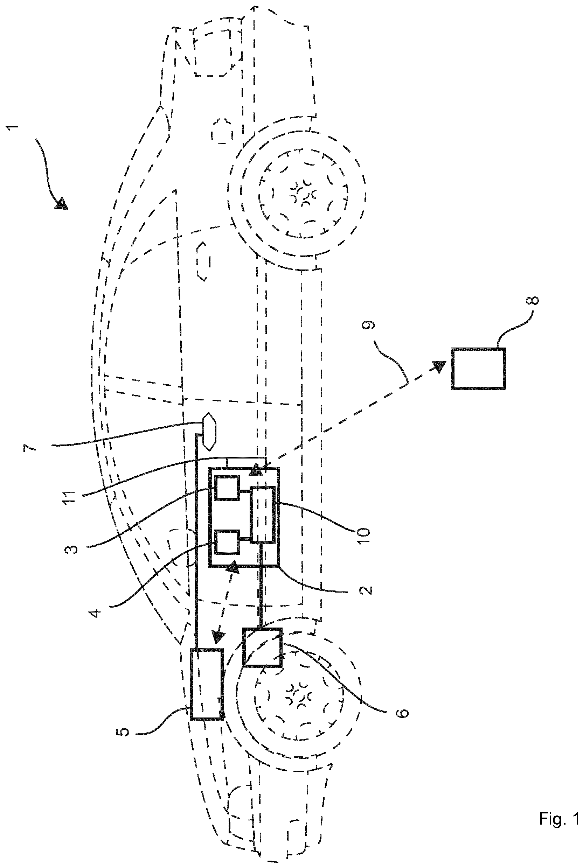

Figur 1 zeigt in schematischer Weise die Anordnung der erfindungswesentlichen Komponenten in einem Kraftfahrzeug.

Figur 1 zeigt ein Kraftfahrzeug 1. In dem Kraftfahrzeug ist ein passives Zugangssystem eingebaut, wobei eine zentrale Steuereinrichtung 5 fahrzeugseitig vorgesehen ist. Diese zentrale Steuereinrichtung 5 kann in Kommunikationsverbindung mit einem mobilen Funkschlüssel treten.

Dazu ist die zentrale Steuereinrichtung 5 für den von Werk aus vorgesehenen Betrieb mit Sensoren an einen Türgriff 7 gekoppelt. Wird der Türgriff 7 betätigt oder registrieren Sensoren an Türgriff 7 eine Annäherung, wird ein Signal an die zentrale Steuereinrichtung 5 übergeben und es erfolgt eine Abfrage des Funkschlüssels, um die Legitimation zu einem Zugriff auf das Fahrzeug zu überprüfen.

In dem vorliegenden Beispiel handelt es sich jedoch um die Anwendung der Erfindung, wobei der Funkschlüssel 4 dauerhaft in einem Gehäuse 2 in dem Fahrzeug untergebracht ist. Ein Benutzer hat also keinen Zugriff auf den Funkschlüssel 4 sondern tritt mit einem mobilen Kommunikationsgerät 8 an das Fahrzeug heran. Die zentrale Steuereinrichtung des Fahrzeuges 5 ist nicht zur Kommunikation mit dem mobilen Kommunikationsgerät 8 ausgebildet. Eine Steuereinrichtung 3 ist jedoch zusammen mit dem Fahrzeugschlüssel 4 in dem Gehäuse 2 aufgenommen und für eine Bluetooth-Kommunikation 9 mit dem mobilen Kommunikationsgerät 8 ausgebildet. Für den Zugriff auf das Fahrzeug erhält entsprechend ein Benutzer des mobilen Kommunikationsgerätes 8 über eine Kommunikationsverbindung einen Zugriffscode oder elektronischen Zugriffstoken auf sein Mobilgerät 8 übermittelt, welches dieses über die Bluetooth-Verbindung 9 an die Steuereinrichtung 3 weitergibt. Ist die Verifikation des Schlüsseldatensatzes erfolgreich, steuert die Steuereinrichtung 3 den Funkschlüssel 4 zur Aktivierung an. Daraufhin kann der Funkschlüssel 4 in Kommunikationsverbindung mit der zentralen Steuereinrichtung 5 des Fahrzeuges treten und eine Entriegelung sowie Startfreigabe des Fahrzeuges ermöglichen. In diesem Ausführungsbeispiel ist extern zu dem Gehäuse 2 eine zentrale Energieversorgung 6 angeordnet. Diese versorgt durch eine Leitungsverbindung in das Gehäuse 2 die Steuereinrichtung 3 sowie eine Spannungsversorgung 10. Die Spannungsversorgung 10 versorgt in diesem Beispiel sowohl die Steuereinrichtung 3 als auch den Fahrzeugschlüssel 4 mit der jeweiligen Betriebsspannung. Während des Normalbetriebes verbleibt es bei dieser Versorgung mit der normalen Betriebsspannung, wobei die Spannungsversorgung 10 unter Steuerung der Steuereinrichtung 3 die Versorgung des Fahrzeugschlüssels 4 zeitweise unterbrechen kann, um diesen stillzulegen.

Wird ein unrechtmäßiger Zugriff auf das Gehäuse 2 detektiert, beispielsweise über eine Sensoreinrichtung 11, welche eine Öffnung des Gehäuses 2 überwacht, gibt die Steuereinrichtung 3 an die Spannungsversorgung 10 eine Steueranweisung, welche eine Folge von zerstörerischen Spannungspulsen an die Versorgungsanschlüsse des Fahrzeugschlüssels 4 anlegt. Der Fahrzeugschlüssel 4 wird durch diese Folge von Spannungspulsen und die daraus resultierenden Stromflüsse durch die elektronischen Komponenten zerstört. Auch wenn ein Benutzer sich unrechtmäßig Zugriff durch Öffnung des Gehäuses 2 verschafft, hat er danach nur Zugriff auf einen zerstörten Schlüssel 4. Die Spannungspulse können in geeigneter Weise auf den Schlüssel 4 abgestimmt sein, beispielsweise eine Folge von 5 bis 10 Spannungspulsen von jeweils 60 V durch Kondensatorentladung im Abstand von einigen Millisekunden enthalten. Dieses Vorgehen bewirkt, dass trotz einer unrechtmäßigen Inbesitznahme des Schlüssels 4 keine Entwendung des Fahrzeuges möglich ist, da der zugehörige Schlüssel 4 zerstört ist.

## Patentansprüche

1. Zugriffskontrolleinrichtung für Fahrzeuge, mit einem elektronischen Funkschlüssel (4), welcher in einem Gehäuse (2) aufgenommen ist,
wobei eine Steuereinrichtung (3) zur zeitweisen Aktivierung des Funkschlüssels ausgebildet ist,
wobei die Steuereinrichtung eine Schnittstelle zur drahtlosen Kommunikation aufweist und ausgebildet ist, in Abhängigkeit von einer drahtlosen Kommunikation die Aktivierung des Funkschlüssels (4) zu bewirken,
wobei eine Spannungsversorgung (10) mit der Steuereinrichtung (3) und dem Funkschlüssel (4) gekoppelt ist, wobei die Spannungsversorgung unter Ansteuerung von der Steuereinrichtung für wenigstens eine erste vorgegebene Zeitdauer eine elektrische Zerstörungsspannung über wenigstens eine Kontaktierung des Funkschlüssels (4) anlegt, welche größer als eine ausgewiesene Betriebsspannung des Funkschlüssels ist, um den Funkschlüssel (4) durch den resultierenden Stromfluss zu zerstören,
**dadurch gekennzeichnet,**
**dass** die Spannungsversorgung (10) unter Ansteuerung von der Steuereinrichtung (3) eine Mehrzahl von elektrischen Spannungspulsen über die wenigstens eine Kontaktierung des Funkschlüssels (4) anlegt, wobei die Spannungspulse jeweils zumindest zeitweise die Zerstörungsspannung übersteigen und durch Pausen getrennt sind, in welchen geringere elektrische Spannung an der wenigstens einen Kontaktierung des Funkschlüssels (4) anliegt.

2. Zugriffskontrolleinrichtung nach Anspruch 1, wobei die wenigstens eine Kontaktierung des Funkschlüssels (4) an einem Batteriekontakt des Funkschlüssels angeordnet ist.

3. Zugriffskontrolleinrichtung nach einem der vorangehenden Ansprüche, wobei die Spannungsversorgung (10) außerdem zur Versorgung des Funkschlüssels (4) mit der ausgewiesenen Betriebsspannung ausgebildet ist.

4. Zugriffskontrolleinrichtung nach einem der vorangehenden Ansprüche, wobei die Zerstörungsspannung größer als 30 V ist und kleiner als 100 V ist, insbesondere kleiner als 60 V ist.

5. Zugriffskontrolleinrichtung nach einem der vorangehenden Ansprüche, wobei die Spannungsversorgung wenigstens einen Kondensator aufweist, welcher auf die Zerstörungsspannung aufgeladen und unter Steuerung der Steuereinrichtung mit dem Funkschlüssel koppelbar ist.

6. Zugriffskontrolleinrichtung nach einem der vorangehenden Ansprüche, wobei die Steuereinrichtung mit Sensormitteln zur Überwachung des Gehäuses ausgebildet ist, welches den Funkschlüssel aufnimmt, wobei die Steuereinrichtung in Abhängigkeit von den Signalen der Sensormittel die Zerstörung des Funkschlüssels durch Ansteuerung der Spannungsversorgung auslöst.

7. Zugriffskontrolleinrichtung nach Anspruch 6, wobei die Sensormittel zur Erfassung einer mechanischen Öffnung des Gehäuses ausgebildet sind.

8. Zugriffskontrolleinrichtung nach einem der vorangehenden Ansprüche, wobei die Steuereinrichtung in Abhängigkeit von über die Schnittstelle zur drahtlosen Kommunikation empfangenen Daten die Zerstörung des Funkschlüssels durch Ansteuerung der Spannungsversorgung auslöst.

9. Zugriffskontrolleinrichtung nach einem der vorangehenden Ansprüche, wobei ein elektrischer Pufferspeicher mit der Spannungsversorgung und der Steuereinrichtung gekoppelt und in dem Gehäuse aufgenommen ist, welcher eine elektrische Energiemenge bereitstellt, um die Zerstörung des Schlüssels ohne weitere externe Speisung der Spannungsversorgung zu bewirken.

## Claims

1. Access control device for vehicles, having an electronic radio key (4) which is accommodated in a housing (2),
wherein a control device (3) is designed for the temporary activation of the radio key,
the control device having an interface for wireless communication and being designed to bring about activation of the radio key (4) in dependance of a wireless communication,
wherein a voltage supply (10) is coupled to the control device (3) and the radio key (4), wherein the voltage supply, under control from the control device, applies an electrical destruction voltage across at least one contact of the radio key (4) for at least a first predetermined period of time, which voltage is greater than a designated operating voltage of the radio key, in order to destroy the radio key (4) by the resulting current flow,
**characterized in**
**in that** the voltage supply (10), under the control of the control device (3), applies a plurality of electrical voltage pulses via the at least one contact of the radio key (4), the voltage pulses in each case exceeding the destruction voltage at least temporarily and being separated by pauses in which lower electrical voltage is applied to the at least one contact of the radio key (4).

2. Access control device according to claim 1, wherein the at least one contact of the radio key (4) is arranged on a battery contact of the radio key.

3. Access control device according to one of the preceding claims, wherein the voltage supply (10) is also designed to supply the radio key (4) with the designated operating voltage.

4. Access control device according to one of the preceding claims, wherein the destruction voltage is greater than 30 V and is less than 100 V, in particular is less than 60 V.

5. Access control device according to one of the preceding claims, wherein the voltage supply comprises at least one capacitor which is charged to the destruction voltage and can be coupled to the radio key under control of the control device.

6. Access control device according to one of the preceding claims, wherein the control device is designed with sensor means for monitoring the housing which accommodates the radio key, wherein the control device triggers the destruction of the radio key by controlling the voltage supply as a function of the signals of the sensor means.

7. Access control device according to claim 6, wherein the sensor means are designed to detect a mechanical opening of the housing.

8. Access control device according to one of the preceding claims, wherein the control device triggers the destruction of the radio key by activating the voltage supply as a function of data received via the interface for wireless communication.

9. Access control device according to any one of the preceding claims, wherein an electrical buffer memory is coupled to the voltage supply and the control device and is accommodated in the housing, which provides an amount of electrical energy to effect the destruction of the key without further external energization of the voltage supply.

## Revendications

1. Dispositif de contrôle d'accès pour véhicules, comprenant une clef à télécommande radiofréquence électronique (4) disposée dans un boîtier (2),
dans lequel un dispositif de commande (3) est conçu pour l'activation temporaire de la clef à télécommande radiofréquence,
dans lequel le dispositif de commande comprend une interface pour la communication sans fil et est conçu pour provoquer l'activation de la clef à télécommande radiofréquence (4) en fonction d'une communication sans fil,
dans lequel une alimentation en tension (10) est couplée au dispositif de commande (3) et à la clef à télécommande radiofréquence (4), l'alimentation en tension appliquant, sous la commande du dispositif de commande et pendant au moins une première période de temps prédéterminée, une tension électrique de destruction au moins un contact électrique de la clef à télécommande radiofréquence (4), ceci tension étant supérieure à une tension de fonctionnement désignée de la clef à télécommande radiofréquence afin de détruire la clef à télécommande radiofréquence (4) par le flux de courant résultant,
**caractérisé en ce que**
l'alimentation en tension (10), sous la commande du dispositif de commande (3), applique plusieurs impulsions de tension électrique par le contact électrique de la clef à télécommande radiofréquence (4), les impulsions de tension dépassant à chaque fois la tension de destruction au moins temporairement et étant séparées par des pauses au cours desquelles une tension électrique plus faible est appliquée au au moins un contact électrique de la clef à télécommande radiofréquence électronique (4).

2. Dispositif de contrôle d'accès selon la revendication 1, dans lequel le au moins un contact électrique de la clef à télécommande radiofréquence (4) est disposé sur un contact de la batterie de la clef à télécommande radiofréquence.

3. Dispositif de contrôle d'accès selon l'une des revendications précédentes, dans lequel l'alimentation électrique (10) est en outre adaptée pour alimenter la clef à télécommande radiofréquence (4) avec la tension de fonctionnement désignée.

4. Dispositif de contrôle d'accès selon l'une des revendications précédentes, dans lequel la tension de destruction est supérieure à 30 V et est inférieure à 100 V, en particulier est inférieure à 60 V.

5. Dispositif de contrôle d'accès selon l'une des revendications précédentes, dans lequel l'alimentation électrique comprend au moins un condensateur qui est chargé à la tension de destruction et peut être couplé à la clef à télécommande radiofréquence sous le contrôle du dispositif de contrôle.

6. Dispositif de contrôle d'accès selon l'une des revendications précédentes, le dispositif de contrôle étant formé avec des moyens de détection pour surveiller le boîtier qui contient la clef à télécommande radiofréquence, le dispositif de contrôle déclenchant la destruction de la clef à télécommande radiofréquence en activant l'alimentation en tension en fonction des signaux des moyens de détection.

7. Dispositif de contrôle d'accès de la revendication 6, dans lequel le moyen de détection est configuré pour détecter une ouverture mécanique du boîtier.

8. Dispositif de contrôle d'accès selon l'une des revendications précédentes, dans lequel le dispositif de contrôle déclenche la destruction de la clef à télécommande radiofréquence en déclenchant l'alimentation électrique en fonction des données reçues via l'interface de communication sans fil.

9. Dispositif de contrôle d'accès selon l'une des revendications précédentes, dans lequel un tampon électrique est couplé à l'alimentation électrique et au dispositif de contrôle et est déposé dans le boîtier, qui fournit une quantité d'énergie électrique pour effectuer la destruction de la clef à télécommande radiofréquence sans autre alimentation électrique externe.
